# EUROPÄISCHE PATENTSCHRIFT

(11) **EP 3 959 426 B1**
(45) Veröffentlichungstag und Bekanntmachung des Hinweises auf die Patenterteilung: **25.01.2023**
(21) Anmeldenummer: 20719351.7
(22) Anmeldetag: 03.04.2020
(51) Int. Cl.: F01P 7/16

(54) **HYBRIDFAHRZEUG**
HYBRID VEHICLE
VÉHICULE HYBRIDE

(30) Priorität: 19.07.2019 DE 102019210714
(43) Veröffentlichungstag der Anmeldung: 02.03.2022
(73) Patentinhaber: Siemens Mobility GmbH, 81739 München (DE)
(72) Erfinder: BEDAU, Christian, 13597 Berlin (DE); HINTERMEIR, Stefan, 83229 Aschau I. Ch (DE)
(86) Internationale Anmeldenummer: PCT/EP2020/059505
(87) Internationale Veröffentlichungsnummer: WO 2021/013390

(56) Entgegenhaltungen:
- EP-A1- 3 482 053
- EP-A1- 3 501 934
- DE-A1-102013 209 045
- DE-A1-102017 108 832

## Beschreibung

Die vorliegende Erfindung betrifft ein Hybridfahrzeug, insbesondere ein Hybrid-Schienenfahrzeug, das über einen Verbrennungsmotor und über einen zusätzlichen elektrischen Antrieb verfügt.

Als Verbrennungsmotor kommt dabei insbesondere ein Dieselmotor in Betracht, während als elektrischer Antrieb insbesondere ein herkömmlicher elektrischer Antrieb eines Schienenfahrzeugs mit den dafür erforderlichen (Haupt-)Komponenten vorgesehen ist, der über einen Fahrdraht mit elektrischer Leistung versorgt wird.

Es ist bekannt, dass Verbrennungsmotoren ab einer bestimmten Baugröße nicht bei jeder Temperatur gestartet werden können, so dass bei extremen Temperaturen der Verbrennungsmotor zu diesem Zweck vorgewärmt werden muss.

Die Anmeldung mit dem Aktenzeichen DE 10 2018 207 852.1 beschreibt eine Erwärmung eines Dieselmotors eines Hybridfahrzeugs. Dabei wurde ein wärmetechnischer Übergang von Komponenten des Fahrdraht-basierten, elektrischen Antriebs zu Komponenten des Verbrennungsmotors vorgesehen, um eine ausreichende Vorwärmung des Verbrennungsmotors zu realisieren.

Verwendet das Hybridfahrzeug den Verbrennungsmotor zum Betrieb, befindet sich der Verbrennungsmotor sowie dessen zugeordneten Komponenten bzw. Aggregate (z.B. eine für den Dieselmotor vorgesehene Kühlung) in der Energieumsetzung, werden also entsprechend betrieben und zum Teil erwärmt. Diejenigen Komponenten des Hybridfahrzeugs, die für den Fahrdraht-basierten, elektrischen Antrieb vorgesehen sind, sind dann an der Energieumsetzung nicht beteiligt und bleiben kalt.

Dies könnte bei extremen Temperaturen oder entsprechenden Schneelagen im Winter zu Vereisungen oder Schneeanlagerungen an hochrelevanten Komponenten des elektrischen Antriebs führen. Insbesondere eine Kühlanlage des Haupttransformators wäre davon nachteilig betroffen, wenn diese im Unterflurbereich des Hybridfahrzeugs integriert angeordnet ist.

Ein Übergang vom (Diesel-basierten) Verbrennungsantrieb auf den Fahrdraht-basierten, elektrischen Antrieb könnte gefährdet werden, wenn Lüfter der Kühlanlage, die für den Haupttransformator vorgesehen ist, an ihrer Oberfläche vereisen und damit für die benötigte Kühlung nicht ausreichend Luft ansaugen können. In Folge würde sich das zur Kühlung verwendete Kühlwasser derart aufheizen, dass der Fahrdraht-basierte Antrieb gefährdet wäre. Eine ähnliche Anordnung wird in DE 10 2017 108832 A1 gezeigt.

Es ist die Aufgabe der vorliegenden Erfindung, ein bezüglich des Antriebswechsels bei extremen Temperaturen verbessertes Hybridfahrzeug mit höherer Verfügbarkeit und Betriebssicherheit der Systemkomponenten anzugeben.

Diese Aufgabe wird durch die Merkmale des unabhängigen Anspruchs 1 gelöst.

Vorteilhafte Weiterbildungen sind durch die abhängigen Ansprüche angegeben.

Die vorliegende Erfindung betrifft ein Hybridfahrzeug, das als wechselbaren Antrieb einen Verbrennungsmotor und einen elektrischen Antrieb aufweist. Der Verbrennungsmotor weist einen nachfolgend als ersten Kühlkreislauf bezeichneten Kühlkreislauf auf, der einen Wärmeträger und einen Kühler aufweist. Der erste Kühlkreislauf ist dazu vorgesehen, Wärme des Verbrennungsmotors mittels des Wärmeträgers aufzunehmen und zum Kühler zu führen, um eine Abgabe der Wärme an die Umwelt des Verbrennungsmotors bzw. des Hybridfahrzeugs zu ermöglichen.

Der elektrische Antrieb weist einen als zweiten Kühlkreislauf bezeichneten Kühlkreislauf auf, der einen Wärmeträger und einen Kühler aufweist. Der zweite Kühlkreislauf ist dazu vorgesehen, Wärme von Komponenten des elektrischen Antriebs mittels des Wärmeträgers zum Kühler zu führen, um eine Abgabe der Wärme an eine Umwelt des elektrischen Antriebs bzw. des Hybridfahrzeugs zu ermöglichen.

Zwischen dem ersten Kühlkreislauf und dem zweiten Kühlkreislauf ist ein Vorwärmkreis angeordnet, der über zwei Verbindungspunkte mit dem ersten Kühlkreislauf derart verbunden ist, dass der Wärmeträger des ersten Kühlkreislaufs zumindest teilweise durch Komponenten des Vorwärmkreises zirkuliert.

Der Vorwärmkreis und der zweite Kühlkreislauf weisen einen Wärmekoppler als gemeinsame Komponente auf. Durch den gemeinsamen Wärmekoppler sind der Vorwärmkreis und der zweite Kühlkreislauf thermisch derart miteinander gekoppelt, dass Wärme steuerbar zwischen den Wärmeträgern der beiden Kühlkreisläufe austauschbar ist.

Der Vorwärmkreis weist einen elektrischen Zuheizer auf, der mit dem Wärmekoppler seriell verbunden ist, so dass der elektrische Zuheizer ebenfalls vom Wärmeträger des ersten Kühlkreislaufs durchströmt wird.

Der elektrischen Zuheizer ist dabei derart angeordnet und ausgebildet, dass von ihm erzeugte Wärme bei Bedarf in zumindest einen der beiden Kühlkreisläufe übertragbar ist.

In einer vorteilhaften Ausgestaltung weist der erste Kühlkreislauf Zylinder des Verbrennungsmotors, den Wärmeträger, einen Sammelbehälter, einen Verteilerbehälter, ein einstellbares Thermostatventil, den Kühler, eine Pumpe sowie einen Motorölkühler auf. Diese sind in Flussrichtung des Wärmeträgers des ersten Kühlkreislaufs gesehen derart geschaltet:
- dass der Wärmeträger vom Verteilerbehälter zur Durchführung einer Zylinderkühlung an die Zylinder aufgeteilt geleitet wird,
- dass der Wärmeträger nach dem passieren der Zylinder durch den Sammelbehälter zusammengefasst wird,
- dass der Wärmeträger vom Sammelbehälter entweder über das Thermostatventil und über den Kühler zur Pumpe gelangt oder dass der Wärmeträger vom Thermostatventil direkt zur Pumpe gelangt, und
- dass der Wärmeträger von der Pumpe über den Motorölkühler zurück zum Verteilerbehälter gelangt.

In einer vorteilhaften Ausgestaltung weist der zweite Kühlkreislauf neben dem Wärmeträger die Komponenten des elektrischen Antriebs, den Wärmetauscher, eine Pumpe und den Lüfter aufweist, die in Flussrichtung des Wärmeträgers gesehen derart geschaltet sind:
- dass der Wärmeträger von den Antriebskomponenten zur Pumpe gelangt,
- dass der Wärmeträger von der Pumpe einerseits direkt zum Lüfter gelangt und andererseits von der Pumpe über den Wärmetauscher zum Lüfter gelangt, und
- dass der Wärmeträger vom Lüfter zurück zu den Antriebskomponenten gelangt, um die beim Betrieb des Antriebs bzw. der Antriebskomponenten entstehende Wärme zu übernehmen.

In einer vorteilhaften Ausgestaltung ist ein erster Verbindungspunkt in Flussrichtung des Wärmeträgers des ersten Kühlkreislaufs gesehen funktionell vor dem Eingang der Pumpe angeordnet ist, so dass der erste Verbindungspunkt bei jeder Stellung des Thermostatventils in Kontakt mit dem Wärmeträger ist und diesen zumindest teilwiese dem Vorwärmkreis zuführt. Ein zweiter Verbindungspunkt ist zwischen dem Motorölkühler und dem Verteilerbehälter des ersten Kühlkreislaufs angeordnet, um den abgezweigten Wärmeträger des ersten Kühlkreislaufs diesem wieder zuzuführen.

In einer vorteilhaften Ausgestaltung weist der Vorwärmkreislauf eine erste Serienschaltung mit der Funktionalität eines Vorwärmgeräts auf. Die erste Serienschaltung ist eingangsseitig mit dem ersten Verbindungspunkt und ausgangsseitig mit dem zweiten Verbindungspunkt verbunden, so dass der abgezweigte Wärmeträger des ersten Kühlkreislaufes vom ersten Verbindungspunkt über die erste Serienschaltung zum zweiten Verbindungspunkt gelangt.

Die erste Serienschaltung weist seriell aufeinanderfolgend eine Pumpe, ein Heizelement und ein Rückschlagventil auf. Durch das Heizelement ist Wärme für einen beabsichtigten Betrieb bzw. für eine Inbetriebnahme des Verbrennungsmotors erzeugbar, die bei Bedarf über den Wärmeträger an Komponenten des Verbrennungsmotors, insbesondere dem Lüfter des ersten Kühlkreislaufs, zugeführt wird.

In einer vorteilhaften Ausgestaltung weist der Vorwärmkreislauf eine zweite Serienschaltung mit der Funktionalität eines Vorwärmgeräts auf. Die erste Serienschaltung ist eingangsseitig mit dem ersten Verbindungspunkt und ausgangsseitig mit dem zweiten Verbindungspunkt verbunden, so dass der abgezweigte Wärmeträger des ersten Kühlkreislaufes vom ersten Verbindungspunkt über die zweite Serienschaltung zum zweiten Verbindungspunkt gelangt.

Die zweite Serienschaltung weist seriell aufeinander folgend den elektrischen Zuheizer und den Wärmetauscher des Vorwärmkreislaufs auf.

Durch den elektrischen Zuheizer wird Wärme für einen beabsichtigten Betrieb bzw. für eine Inbetriebnahme des Verbrennungsmotors oder des elektrischen Antriebs erzeugt.

Die Wärme des Zuheizers gelangt wahlweise entweder über den Wärmeträger des ersten Kühlkreislaufs an Komponenten des Verbrennungsmotors, insbesondere an den Lüfter des ersten Kühlkreislaufs (KK1), zur Erwärmung. Alternativ dazu gelangt die Wärme des Zuheizers über den Wärmetauscher und über den Wärmeträger des zweiten Kühlkreislaufs an Komponenten des elektrischen Antriebs, insbesondere an den Lüfter (206) des zweiten Kühlkreislaufs (KK2), zur Erwärmung.

In einer vorteilhaften Ausgestaltung ist der elektrische Zuheizer aus einer zusätzlichen Sekundärwicklung des Haupttransformators des Hybridfahrzeugs oder aus einem Hilfsbetriebs-Bordnetz des Hybridfahrzugs mit Leistung versorgt, so dass er auch im Stillstand des Hybridfahrzeugs betreibbar und zuschaltbar ist.

In einer vorteilhaften Ausgestaltung weist die zweite Serienschaltung zur Realisierung der Funktionalität des Vorwärmgeräts neben dem elektrischen Zuheizer und dem Wärmetauscher eine Pumpe, ein Rückschlagventil sowie ein schaltbares Ventil auf, die derart geschaltet sind, dass der abgezweigte Wärmeträger in Flußrichtung betrachtet vom ersten Verbindungspunkt über die Pumpe zum Rückschlagventil gelangt, dass der abgezweigte Wärmeträger in Flußrichtung betrachtet vom Rückschlagventil über den Wärmetauscher zum elektrischen Vorheizer und von dort zum zweiten Verbindungspunkt gelangt.

Das schaltbare Ventil ist parallel zur Pumpe und zum Rückschlagventil angeordnet, so dass diese über das schaltbare Ventil überbrückbar sind. Der Wärmeträger gelangt dann bei einem ersten Schaltzustand des schaltbaren Ventils vom ersten Verbindungspunkt über die Pumpe und über das nachgeschaltete Rückschlagventil zum Wärmetauscher. In einem zweiten Schaltzustand des schaltbaren Ventils gelangt der Wärmeträger vom ersten Verbindungspunkt direkt zum Wärmetauscher, wobei das Rückschlagventil über die Steuerung der Pumpe eine Zirkulation des Wärmeträgers durch das Vorwärmgerät verhindert.

In einer vorteilhaften Ausgestaltung ist das Hybridfahrzeug ein Hybrid-Schienenfahrzeug, bei dem der Verbrennungsmotor ein Dieselmotor ist und bei dem der elektrische Antrieb ein elektrischer Antrieb ist, der über einen Fahrdraht mit elektrischer Leistung versorgt wird.

Die vorliegende Erfindung bietet den Vorteil, eine Verfügbarkeit des Hybridfahrzugs bei extremen Verhältnissen des Wetters im Winter zu erhöhen. Ein sicherer Übergang zwischen den beiden Antrieben ist auch bei sehr tiefen Temperaturen sichergestellt.

Durch die vorliegende Erfindung wird eine Enteisung von Komponenten (z.B. von Lüftern) ermöglicht, die ohne Mehraufwand an Betriebsstoffen und somit emissionsneutral ist.

Durch den elektrischen Zuheizer wird der ökologische Fingerabdruck des Hybridfahrzeuges weiter verbessert, weil im Fahrdraht-basierten Betrieb kein Kraftstoff zur Vorwärmung verbraucht wird.

Die vorliegende Erfindung bietet durch den elektrischen Zuheizer auch den Vorteil, dass eine damit realisierte elektrische Zuheizung auch im Stillstand, z.B. bei Bahnhofsaufenthalten, erfolgen kann, wobei diese Zuheizung sehr geräuscharm arbeitet.

Zusammengefasst stellt die vorliegende Erfindung ein bezüglich des Antriebswechsels bei extremen Temperaturen verbessertes Hybridfahrzeug mit höherer Verfügbarkeit und Betriebssicherheit der Systemkomponenten zur Verfügung, ohne dabei den ökologischen Fingerabdruck des Hybridfahrzeugs nachteilig zu beeinflussen.

Nachfolgend wird die Erfindung anhand einer Zeichnung näher erläutert. Dabei zeigt:

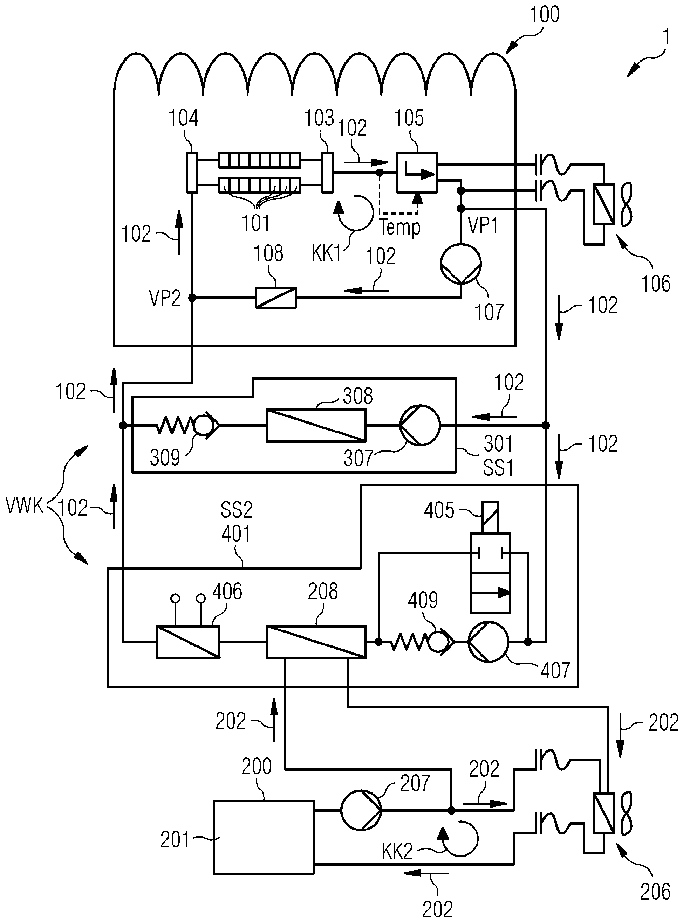

**FIG 1** wesentliche Komponenten eines Hybridfahrzeugs 1, die erfindungsgemäß wärmetechnisch miteinander gekoppelt sind.

Das Hybridfahrzeug 1 weist als Schienenfahrzeug zwei verschiedene Antriebe auf, nämlich einerseits einen Verbrennungs-basierten Antrieb bzw. Verbrennungsmotor 100 und einen Fahrdraht-basierten, elektrischen Antrieb 200.

Dabei ist der Verbrennungsmotor 100 beispielsweise als Diesel-Motor ausgebildet, der Zylinder 101 zur Verbrennung von (Diesel-) Kraftstoff beinhaltet. Beispielhaft sind hier sechzehn Zylinder 101 gezeigt, die in zwei Reihen mit jeweils acht Zylindern 101 angeordnet sind.

Der Verbrennungsmotor 100 weist einen Kühlkreislauf auf, der nachfolgend als ersten Kühlkreislauf KK1 bezeichnet wird. Dieser ist dazu vorgesehen, vom Verbrennungsmotor 100 generierte Wärme mittels eines Wärmeträgers 102 zu einem Kühler 106 zu führen, der die ihm zugeführte Wärme an eine Umwelt des Verbrennungsmotors 100 bzw. des Hybridfahrzeugs 1 abgibt.

Der erste Kühlkreislauf KK1 weist somit die Zylinder 101, den Wärmeträger 102, einen Sammelbehälter 103, einen Verteilerbehälter 104, ein Thermostatventil 105, den Kühler 106, eine Pumpe 107 (Motorpumpe) sowie einen Motorölkühler 108 auf.

Als Wärmeträger 102 wird beispielsweise Wasser verwendet, dem in einer bevorzugten Ausgestaltung ein Frostschutzmittel beigemischt ist.

Der Wärmeträger 102 wird vom Sammelbehälter 103 und/oder vom Verteilerbehälter 104 bereitgestellt.

Der Verteilerbehälter 104 ist in Flussrichtung des Wärmeträgers 102 gesehen den Zylindern 101 vorgeschaltet. Er verteilt den Wärmeträger 102 zur Durchführung einer Zylinderkühlung auf die Reihen der Zylinder 101.

Der Sammelbehälter 103 ist in Flussrichtung des Wärmeträgers 102 gesehen den Zylindern 101 nachgeschaltet. Er fasst den geteilten Wärmeträger 102 aus den Reihen der Zylinder 101 wieder zusammen.

Der Wärmeträger 102 übernimmt beim Betrieb des Verbrennungsmotors 100 die dabei entstehende Wärme von den Zylindern 101 und gelangt vom Sammelbehälter 103 über das Thermostatventil 105 zum Kühler 106.

Das Thermostatventil 105 ist dazu ausgebildet, den Kühler 106 beim Erreichen einer vorgegebenen Temperatur Temp des Wärmeträgers 102 an den ersten Kühlkreislauf KK1 anzuschalten bzw. den Kühler 106 beim Unterschreiten einer vorgegebenen Temperatur Temp des Wärmeträgers 102 vom ersten Kühlkreislauf KK1 wegzuschalten.

Je nach Schaltung des Thermostatventils 105 gelangt also der Wärmeträger 102 vom Thermostatventil 105 entweder über den Kühler 106 zur Pumpe 107 oder der Kühler 106 wird umgangen, so dass der Wärmeträger 102 vom Thermostatventil 105 direkt zur Pumpe 107 gelangt.

Der Kühler 106 ist beispielsweise als Flüssigkeits-Luft-Wärmetauscher mit nachgeschaltetem Ventilator ausgebildet und gibt die ihm zugeführte Wärme an die Umwelt des Verbrennungsmotors 100 bzw. des Hybridfahrzeugs 1 ab.

Die Pumpe 107 ist dem Thermostatventil 105 bzw. dem Kühler 106 nachgeschaltet und wird dafür verwendet, den Wärmeträger 102 innerhalb des ersten Kühlkreislauf KK1 zu befördern. Die Pumpe 107 ist beispielsweise als Kreiselpumpe ausgebildet.

Somit gelangt der Wärmeträger 102 vom Thermostatventil 105 bzw. vom Kühler 106 kommend über die Pumpe 107 zum Motorölkühler 108 und von dort zurück zum Verteilerbehälter 104.

Der Motorölkühler 108 kühlt Motoröl des Verbrennungsmotors 100, wobei das Motoröl als Schmieröl innerhalb des Verbrennungsmotors 100 Zylinder-nah angeordnet ist und entsprechend Zylinder-nah verwendet wird.

Eine notwendige Kühlung des Motoröls wird durch den Wärmeträger 102 vorgenommen, der die Wärme des Motoröls zusätzlich über den Motorölkühler 108 aufnimmt und letztlich dem Kühler 106 zur Abgabe an die Umwelt zuführt.

Das Hybridfahrzeug 1 weist als Schienenfahrzeug neben dem Verbrennungsmotor 100 einen Fahrdraht-basierten, elektrischen Antrieb 200 auf, dessen Komponenten 201 im Betrieb Wärme produzieren.

Die Komponenten 201 des elektrischen Antriebs 200 sind dazu ausgebildet, elektrische Leistung vom Fahrdraht für einen elektrischen Antrieb des Hybridfahrzeugs 1 umzuformen und dieses somit elektrisch anzutreiben.

Beispielsweise umfassen diese Komponenten 201 einen Haupttransformator, einen Stromrichter, einen Hilfsbetriebstransformator, etc.

Die im Betrieb der Komponenten 201 entstehende Wärme wird über einen Kühlkreislauf, der nachfolgend als zweiter Kühlkreislauf KK2 bezeichnet wird, mittels eines Wärmeträgers 202 von den Komponenten 201 des elektrischen Antriebs 200 über eine Pumpe 207 zu einem Kühler 206 geführt.

Der Kühler 206 ist beispielsweise als Flüssigkeits-Luft-Wärmetauscher mit nachgeschaltetem Ventilator ausgebildet und gibt die ihm zugeführte Wärme an die Umwelt des Hybridfahrzeugs 1 bzw. an die Umwelt des elektrischen Antriebs 200 ab.

Vom Kühler 206 gelangt der Wärmeträger 202 dann im Rücklauf wieder zurück zu den Komponenten 201 des elektrischen Antriebs 200. Der Wärmeträger 202 ist dabei derart in Kontakt mit den Komponenten 201, dass der Wärmeträger 202 die beim Betrieb der Komponenten 201 entstehende Wärme übernimmt.

Als Wärmeträger 202 wird beispielsweise Wasser verwendet, dem in einer bevorzugten Ausgestaltung ein Frostschutzmittel beigemischt ist.

Die Pumpe 207 ist in Flussrichtung des Wärmeträgers 202 gesehen dem Kühler 206 vorgeschaltet und wird dafür verwendet, den Wärmeträger 202 innerhalb des zweiten Kühlkreislaufs KK2 zu befördern.

Die Pumpe 207 ist beispielsweise als Kreiselpumpe ausgebildet .

Zusätzlich ist im zweiten Kühlkreislauf KK2 ein Wärmetauscher 208 vorgesehen, der eingangsseitig mit dem Ausgang der Pumpe 207 verbunden ist und der ausgangsseitig mit einem weiteren Eingang des Kühlers 206 verbunden ist.

Dadurch wird im zweiten Kühlkreislauf KK2 über den Wärmetauscher 208 ein paralleler Zweig gebildet, über den bei Bedarf, wie nachfolgend beschrieben, Wärme vom zweiten Kühlkreislauf KK2 über einen Vorwärmkreislauf VWK zum ersten Kühlkreislauf KK1 gelangen kann.

Entsprechend kann über den Wärmetauscher 208 des parallelen Zweigs bei Bedarf, wie nachfolgend beschrieben, Wärme vom ersten Kühlkreislauf KK1 und/oder vom Vorwärmkreislauf VWK zum zweiten Kühlkreislauf KK2 gelangen.

Der zweite Kühlkreislauf KK2 weist somit die Komponenten 201 des elektrischen Antriebs 200, den Wärmeträger 202, die Pumpe 207, den Kühler 206 sowie den Wärmetauscher 208 auf.

Zugleich ist der Wärmetauscher 208 Bestandteil des Vorwärmkreislaufs VWK, der jetzt beschrieben wird.

Der Vorwärmkreislauf VWK ist über zwei Verbindungspunkte VP1, VP2 mit dem ersten Kühlkreislauf KK1 gekoppelt.

Ein erster Verbindungspunkt VP1 ist zwischen dem Thermostatventil 105 bzw. dem Kühler 106 und vor der Pumpe 107 angeordnet. Funktionell betrachtet ist er in Flussrichtung des Wärmeträgers 102 gesehen am Eingang der Pumpe 107 angeordnet, so dass er bei jeder Stellung des Thermostatventils 105 in Kontakt mit dem Wärmeträger 102 ist bzw. von diesem durchflossen wird.

Ein zweiter Verbindungspunkt VP2 ist zwischen dem Motorölkühler 108 und dem Verteilerbehälter 104 angeordnet - genauer ist er in Flussrichtung des Wärmeträgers 102 gesehen zwischen dem Ausgang des Motorölkühlers 108 und dem Eingang des Verteilerbehälters 104 angeordnet.

Der Vorwärmkreislauf VWK weist eine erste Serienschaltung SS1 auf, die eingangsseitig mit dem ersten Verbindungspunkt VP1 und ausgangsseitig mit dem zweiten Verbindungspunkt VP2 verbunden ist. Damit ist diese erste Serienschaltung SS1 parallel zur Serienschaltung aus Pumpe 107 und Motorölkühler 108 des ersten Kühlkreislaufs KK1 angeordnet.

Die erste Serienschaltung SS1 realisiert die Funktionalität eines Vorwärmgeräts 301. Das Vorwärmgerät 301 beinhaltet dazu eine Pumpe 307, ein Heizelement 308 und ein Rückschlagventil 309.

Der Wärmeträger 102 des ersten Kühlkreislaufs KK1 wird am ersten Verbindungspunkt VP1 aufgeteilt. Der Wärmeträger 102 gelangt vom ersten Verbindungspunkt VP1 über das Vorwärmgerät 301 zum zweiten Verbindungspunkt VP2.

Der aufgeteilte Wärmeträger 102 wird am zweiten Verbindungspunkt VP2 wieder zusammengefasst.

In einer bevorzugten Ausgestaltung gelangt der Wärmeträger 102 vom ersten Verbindungspunkt VP1 über die Pumpe 307 des Vorwärmgeräts 301 zum Heizelement 308 des Vorwärmgeräts 301 und von dort zum Rückschlagventil 309 des Vorwärmgeräts 301, um danach zum zweiten Verbindungspunkt VP2 zu gelangen.

Das Heizelement 308 ist beispielsweise als elektrisches Heizelement oder als Brenner ausgebildet, um ggf. für den Betrieb bzw. für eine Inbetriebnahme des Verbrennungsmotors 100 benötigte Wärme zu erzeugen. Die vom Heizelement 308 gebildete Wärme wird also bei Bedarf über den Wärmeträger 102 dem Verbrennungsmotor 100 zugeführt.

Die Pumpe 307 des Vorwärmgeräts 301 ist beispielsweise eine Kreiselpumpe. Sie ist dafür vorgesehen, den Wärmeträger 102 des ersten Kühlkreislaufs KK1 durch die Komponenten der ersten Serienschaltung SS1 bzw. des Vorwärmgeräts 301 zu befördern.

Das Rückschlagventil 309 ist beim Betrieb der Pumpe 307 geöffnet. Dies wird über den durch die Pumpe 307 auf den Wärmeträger 102 gebildeten Druck sichergestellt. Entsprechend ist das Rückschlagventil 309 geschlossen, wenn die Pumpe 307 au-βer Betrieb genommen ist.

Die Funktionalität des Vorwärmgeräts 301 wird also über die Pumpe 307 aktiviert bzw. deaktiviert.

Das Vorwärmgerät 301 ist deaktiviert, wenn das Vorwärmen des Verbrennungsmotors 100 mittels des Heizelements 308 nicht erforderlich ist bzw. nicht gewünscht ist.

Beispielswiese ist das der Fall, wenn die vom zweiten Kühlkreislauf KK2 über den Vorwärmkreislauf VWK zum ersten Kühlkreislauf KK1 übertragene Wärme bereits ausreichend ist, den Verbrennungsmotor 100 zu erwärmen.

Beispielswiese ist das auch dann der Fall, wenn ein mit Treibstoff betriebener Brenner als Heizelement 308 vorgesehen ist, dessen Betrieb aus wirtschaftlichen Gründen oder aufgrund von Umweltgesichtspunkten nicht benötigt bzw. nicht erwünscht ist.

Der Vorwärmkreislauf VWK weist eine zweite Serienschaltung SS2 auf, die eingangsseitig mit dem ersten Verbindungspunkt VP1 und ausgangsseitig mit dem zweiten Verbindungspunkt VP2 verbunden ist.

Damit ist diese zweite Serienschaltung SS2 ebenfalls mit dem ersten Kühlkreislauf KK1 verbunden und wird ja nach Steuerung ebenfalls vom ersten Wärmeträger 102 durchströmt.

Die zweite Serienschaltung SS2 realisiert die Funktionalität eines Vorwärmgeräts 401. Das Vorwärmgerät 401 beinhaltet dazu eine Pumpe 407, ein Rückschlagventil 409, den Wärmetauscher 208, der als Heizelement der zweiten Serienschaltung SS2 dient, einen elektrischen Zuheizer 406 sowie ein schaltbares Ventil 405.

Pumpe 407 und Rückschlagventil 409 sind seriell hintereinander angeordnet.

Das schaltbare Ventil 405 ist dabei parallel zur Pumpe 407 und zum Rückschlagventil 409 geschaltet, so dass diese beiden Komponenten wie nachfolgend beschrieben über das schaltbare Ventil 405 ggf. überbrückt werden können.

Der Wärmeträger 102 gelangt somit vom ersten Verbindungspunkt VP1 über das Vorwärmgerät 401 zum zweiten Verbindungspunkt VP2.

In einer bevorzugten Ausgestaltung gelangt der Wärmeträger 102 bei einem ersten Schaltzustand des schaltbaren Ventils 405 vom ersten Verbindungspunkt VP1 über die Pumpe 407 und über das nachgeschaltete Rückschlagventil 409 zum Wärmetauscher 208.

Der erste Schaltzustand wird entsprechend als offener Schaltzustand des schaltbaren Ventils 405 bezeichnet.

In einem zweiten Schaltzustand des schaltbaren Ventils 405 gelangt der Wärmeträger 102 vom ersten Verbindungspunkt VP1 direkt zum Wärmetauscher 208, d.h. die Pumpe 407 und das nachgeschaltete Rückschlagventil 409 werden überbrückt.

Der zweite Schaltzustand wird entsprechend als geschlossener Schaltzustand des schaltbaren Ventils 405 bezeichnet.

Vom Wärmetauscher 208 gelangt der Wärmeträger 102 über den elektrischen Zuheizer 406 zum zweiten Verbindungspunkt VP2.

In einer bevorzugten Ausgestaltung (hier nicht näher dargestellt) wird der elektrische Zuheizer 406 aus einer zusätzlichen Sekundärwicklung des Haupttransformators des Hybridfahrzeugs 1 oder aus einem Hilfsbetriebs-Bordnetz des Hybridfahrzugs 1 versorgt, so dass er auch im Stillstand des Hybridfahrzeugs betrieben und zugeschaltet werden kann.

Durch den Wärmetauscher 208 bzw. durch den elektrischen Zuheizer 406, die wahlweise als Heizelemente der zweiten Serienschaltung SS2 betrieben werden, wird Wärme an den Wärmeträger 102 des Vorwärmkreises VWK übertragen.

Diese Wärme gelangt wahlweise über den Wärmeträger 102 zum Verbrennungsmotor 100.

Durch den Wärmetauscher 208 kann, wie nachfolgend beschrieben, wahlweise auch Wärme vom ersten Kühlkreislauf KK1 über den Vorwärmkreis VWK zum zweiten Kühlkreislauf KK2 übertragen werden, um die dortigen Komponenten aufzuwärmen.

Zuletzt kann durch den Wärmetauscher 208, wie nachfolgend beschrieben, wahlweise und ohne Beteiligung der Komponenten des ersten Kühlkreislaufs auch Wärme vom Vorwärmkreis VWK zum zweiten Kühlkreislauf KK2 übertragen werden, um die dortigen Komponenten aufzuwärmen.

Die Pumpe 407 des Vorwärmgeräts 401 ist beispielsweise eine Kreiselpumpe. Sie ist dafür vorgesehen, den Wärmeträger 102 des ersten Kühlkreislaufs KK1 durch die Komponenten der zweiten Serienschaltung SS2 zu befördern.

Das Rückschlagventil 409 ist beim Betrieb der Pumpe 407 geöffnet. Dies wird über den durch die Pumpe 407 auf den Wärmeträger 102 gebildeten Druck sichergestellt. Entsprechend ist das Rückschlagventil 409 geschlossen, wenn die Pumpe 407 au-βer Betrieb genommen ist.

Die Funktionalität des Vorwärmgeräts 401 wird also über die Pumpe 407 aktiviert bzw. deaktiviert.

Nachfolgend wird der zusammenwirkende Betrieb der einzelnen Komponenten der beiden Kühlkreisläufe KK1, KK2 sowie des Vorwärmkreislaufs VWK beschrieben:
In einem ersten Fall wird ein benötigtes Aufheizen des Kühlers 206 bei Vereisungsgefahr im Winter für den Fall vorausgesetzt, dass sich beim Hybridfahrzeug 1 der Verbrennungsmotor 100 in Betrieb befindet und auf einen Fahrdraht-basierten Betrieb, d.h. auf den elektrischen Antrieb 200, umgeschaltet werden soll.

Wie beschrieben ist der Kühler 206 als Teil des zweiten Kühlkreislaufs KK2 dazu vorgesehen, die Kühlung der Komponenten 201 des elektrischen Antriebs 200 sicherzustellen.

Im normalen Betrieb des Verbrennungsmotors 100 läuft der erste Kühlkreislauf KK1 über die Komponenten Pumpe 107, Motorölkühler 108, Verteilerbehälter 104, Zylinder 101, Sammelbehälter 103, Thermostatventil 105, Kühler 106 und zurück zur Pumpe 107.

Die Rückschlagventile 309 und 409 verhindern über die Steuerung der jeweiligen Pumpen 307 und 407 eine Zirkulation des Wärmeträgers 102 durch die beiden Vorwärmgeräte 301 und 401. Das schaltbare Ventil 405 ist geöffnet, d.h. das Rückschlagventil 409 und die Pumpe 407 sind Teil der zweiten Serienschaltung und werden nicht überbrückt.

Wird für die beabsichtige Antriebsumschaltung eine Vereisungsgefahr beim Lüfter 206 detektiert (beispielsweise durch Beobachtungen des Lokführers, über eine Auswertung von meteorologischen Messwerten oder durch Messwerte von Sensoren, etc.), dann wird das schaltbare Ventil 405 geschlossen, d.h. das Rückschlagventil 409 und die Pumpe 407 werden überbrückt und funktionell deaktiviert.

Dadurch entsteht eine zusätzliche Zirkulation des Wärmeträgers 102 im Vorwärmkreislauf VWK, die konkret durch den Wärmetauscher 208 erfolgt.

Über den Wärmetauscher 208 gelangt dann Wärme, die vom Verbrennungsmotor 100 gebildet wurde, in den zweiten Kühlkreislauf KK2, genauer in dessen Wärmeträger 202. Der Wärmeträger 202 transportiert diese Wärme zum Lüfter 206, um diesen aufzutauen bzw. um dort eine Eisbildung im Winter zu reduzieren bzw. zu verhindern.

In einem zweiten Fall wird davon ausgegangen, dass im Fahrdraht-basierten Betrieb mittels elektrischen Antrieb 200 die Abwärme der Komponenten 201 nicht ausreicht, um den Verbrennungsmotor 100 ordnungsgemäß für einen gewünschten Folgebetrieb zu erwärmen.

Bevorzugt wird dann über den elektrischen Zuheizer 406, der Bestandteil der zweiten Serienschaltung SS2 des Vorwärmkreises VWK ist, benötigte Wärme zusätzlich bereitgestellt und über den Wärmeträger 102 zu den Komponenten des Verbrennungsmotors 100 übertragen.

Vorteilhaft muss hier das Vorwärmgerät 301, falls es kraftstoffbetrieben ist, nicht aktiviert werden. Es wird mit Blick auf Emissionswerte ein erstrebenswerter Zustand realisiert, bei dem unter Fahrdraht-basiertem Betrieb weder ein Verbrennungsmotor noch ein kraftstoffbetriebenes Vorwärmgerät aktiviert werden muss.

Bei einer angenommenen extremen Vereisung- bzw. Vereisungsgefahr des Kühlers 206 kann der elektrische Zuheizer 406 bei geöffnetem schaltbaren Ventil 405 die Enteisung des Kühlers 206 zusätzlich unterstützen.

## Patentansprüche

1. Hybridfahrzeug, das als wechselbaren Antrieb einen Verbrennungsmotor (100), einen elektrischen Antrieb (200) sowie zwei Kühlkreisläufe (KK1, KK2) aufweist,
- bei dem der Verbrennungsmotor (100) einen ersten Kühlkreislauf (KK1) mit einem Wärmeträger (102) und mit einem Kühler (106) aufweist, wobei der erste Kühlkreislauf (KK1) dazu vorgesehen ist, Wärme des Verbrennungsmotors (100) mittels des Wärmeträgers (102) aufzunehmen und zum Kühler (106) zu führen, um eine Abgabe der Wärme an eine Umwelt des Verbrennungsmotors (100) zu ermöglichen,
- bei dem der elektrische Antrieb (200) einen zweiten Kühlkreislauf (KK2) mit einem Wärmeträger (202) und mit einem Kühler (206) aufweist, wobei der zweite Kühlkreislauf (KK2) dazu vorgesehen ist, Wärme von Komponenten (201) des elektrischen Antriebs (200) mittels des Wärmeträgers (202) zum Kühler (206) zu führen, um eine Abgabe der Wärme an eine Umwelt des elektrischen Antriebs (200) zu ermöglichen,
- bei dem zwischen dem ersten Kühlkreislauf (KK1) und dem zweiten Kühlkreislauf (KK2) ein Vorwärmkreis (VWK) angeordnet ist,
- bei dem der Vorwärmkreis (VWK) über zwei Verbindungspunkte (VP1, VP2) mit dem ersten Kühlkreislauf (KK1) derart verbunden ist, dass der Wärmeträger (102) des ersten Kühlkreislaufs (KK1) durch Komponenten des Vorwärmkreises (VWK) zirkuliert,
- bei dem der Vorwärmkreis (VWK) und der zweite Kühlkreislauf (KK2) einen Wärmetauscher (208) als gemeinsame Komponente aufweisen und durch den Wärmetauscher (208) thermisch derart gekoppelt sind, dass Wärme steuerbar zwischen den Wärmeträgern (102, 202) der beiden Kühlkreisläufe (KK1, KK2) austauschbar ist,
- bei dem der Vorwärmkreis (VWK) einen elektrischen Zuheizer (406) aufweist, der mit dem Wärmetauscher (208) seriell verbunden ist, so dass der elektrische Zuheizer (406) und der Wärmetauscher (208) ebenfalls vom Wärmeträger (102) des ersten Kühlkreislaufs (KK1) durchströmt wird, und
- dass der elektrische Zuheizer (406) derart angeordnet und ausgebildet ist, dass von ihm erzeugte Wärme bei Bedarf in zumindest einen der beiden Kühlkreisläufe (KK1, KK2) übertragbar ist,
- bei dem der zweite Kühlkreislauf (KK2) neben dem Wärmeträger (202) die Komponenten (201) des elektrischen Antriebs (200), den Wärmetauscher (208), eine Pumpe (207) und den Kühler (206) aufweist, die in Flussrichtung des Wärmeträgers (202) gesehen derart geschaltet sind:
- dass der Wärmeträger (202) von den Komponenten (201) zur Pumpe (207) gelangt,
- dass der Wärmeträger (202) von der Pumpe (207) einerseits direkt zum Kühler (206) gelangt und andererseits von der Pumpe (207) über den Wärmetauscher (208) zum Kühler (206) gelangt,
- dass der Wärmeträger (202) vom Kühler (206) zurück zu den Komponenten (201) gelangt, um die beim Betrieb der Komponenten (201) entstehende Wärme zu übernehmen.

2. Hybridfahrzeug nach Anspruch 1,
- bei dem der erste Kühlkreislauf (KK1) Zylinder (101) des Verbrennungsmotors (100), den Wärmeträger (102), einen Sammelbehälter (103), einen Verteilerbehälter (104), ein einstellbares Thermostatventil (105), den Kühler (106), eine Pumpe (107) sowie einen Motorölkühler (108) aufweist, die in Flussrichtung des Wärmeträgers (102) gesehen derart geschaltet sind:
- dass der Wärmeträger (102) vom Verteilerbehälter (104) zur Durchführung einer Zylinderkühlung an die Zylinder (101) aufgeteilt geleitet wird,
- dass der Wärmeträger (102) nach dem passieren der Zylinder (101) durch den Sammelbehälter (103) zusammengefasst wird,
- dass der Wärmeträger (102) vom Sammelbehälter (103) entweder über das Thermostatventil (105) und über den Kühler (106) zur Pumpe (107) gelangt oder dass der Wärmeträger (102) vom Thermostatventil (105) direkt zur Pumpe (107) gelangt,
- dass der Wärmeträger (102) von der Pumpe (107) über den Motorölkühler (108) zurück zum Verteilerbehälter (104) gelangt.

3. Hybridfahrzeug nach einem der vorhergehenden Ansprüche,
- bei dem ein erster Verbindungspunkt (VP1) in Flussrichtung des Wärmeträgers (102) des ersten Kühlkreislaufs (KK1) gesehen funktionell vor dem Eingang der Pumpe (107) angeordnet ist, so dass der erste Verbindungspunkt (VP1) bei jeder Stellung des Thermostatventils (105) in Kontakt mit dem Wärmeträger (102) ist und diesen zumindest teilweise dem Vorwärmkreis (VWK) zuführt,
- bei dem ein zweiter Verbindungspunkt (VP2) zwischen dem Motorölkühler (108) und dem Verteilerbehälter (104) des ersten Kühlkreislaufs (KK1) angeordnet ist, um den abgezweigten Wärmeträger (102) des ersten Kühlkreislaufs (KK1) diesem wieder zuzuführen.

4. Hybridfahrzeug nach einem der vorhergehenden Ansprüche,
- bei dem der Vorwärmkreislauf (VWK) eine erste Serienschaltung (SS1) mit der Funktionalität eines Vorwärmgeräts (301) aufweist,
- bei dem die erste Serienschaltung (SS1) eingangsseitig mit dem ersten Verbindungspunkt (VP1) und ausgangsseitig mit dem zweiten Verbindungspunkt (VP2) verbunden ist, so dass der abgezweigte Wärmeträger (102) des ersten Kühlkreislaufes (KK1) vom ersten Verbindungspunkt (VP1) über die erste Serienschaltung (SS1) zum zweiten Verbindungspunkt (VP2) gelangt,
- bei dem die erste Serienschaltung seriell aufeinander folgend eine Pumpe (307), ein Heizelement (308) und ein Rückschlagventil (309) aufweist,
- wobei durch das Heizelement (308) Wärme für einen beabsichtigten Betrieb bzw. für eine Inbetriebnahme des Verbrennungsmotors (100) erzeugbar ist, die bei Bedarf über den Wärmeträger (102) an Komponenten des Verbrennungsmotors (100), insbesondere an den Kühler (106) des ersten Kühlkreislaufs (KK1), gelangt.

5. Hybridfahrzeug nach einem der vorhergehenden Ansprüche,
- bei dem der Vorwärmkreislauf (VWK) eine zweite Serienschaltung (SS2) mit der Funktionalität eines Vorwärmgeräts (406, 208) aufweist,
- bei dem die zweite Serienschaltung (SS2) eingangsseitig mit dem ersten Verbindungspunkt (VP1) und ausgangsseitig mit dem zweiten Verbindungspunkt (VP2) verbunden ist, so dass der abgezweigte Wärmeträger (102) des ersten Kühlkreislaufes (KK1) vom ersten Verbindungspunkt (VP1) über die zweite Serienschaltung (SS2) zum zweiten Verbindungspunkt (VP2) gelangt,
- bei dem die zweite Serienschaltung (SS2) seriell aufeinander folgend den elektrischen Zuheizer (406) und den Wärmetauscher (208) des Vorwärmkreislauf (VWK) aufweist,
- wobei durch den elektrischen Zuheizer (406) Wärme für einen beabsichtigten Betrieb bzw. für eine Inbetriebnahme des Verbrennungsmotors (100) oder des elektrischen Antriebs (200) erzeugbar ist,
- wobei die Wärme des Zuheizers (406) wahlweise entweder über den Wärmeträger (102) des ersten Kühlkreislaufs (KK1) an Komponenten des Verbrennungsmotors (100), insbesondere an den Kühler (106) des ersten Kühlkreislaufs (KK1), zur Erwärmung gelangt oder
- wobei die Wärme des Zuheizers (406) über den Wärmetauscher (208) und über Wärmeträger (202) des zweiten Kühlkreislaufs (KK2) an Komponenten des elektrischen Antriebs (200), insbesondere an den Kühler (206) des zweiten Kühlkreislaufs (KK2), zur Erwärmung gelangt.

6. Hybridfahrzeug nach einem der vorhergehenden Ansprüche, bei dem der elektrische Zuheizer (406) aus einer zusätzlichen Sekundärwicklung des Haupttransformators des Hybridfahrzeugs (1) oder aus einem Hilfsbetriebs-Bordnetz des Hybridfahrzugs (1) mit Leistung versorgt ist, so dass er auch im Stillstand des Hybridfahrzeugs (1) betreibbar und zuschaltbar ist.

7. Hybridfahrzeug nach einem der vorhergehenden Ansprüche,
- bei dem die zweite Serienschaltung (SS2) zur Realisierung der Funktionalität des Vorwärmgeräts (401) neben dem elektrischen Zuheizer (406) und dem Wärmetauscher (208) eine Pumpe (407), ein Rückschlagventil (409) sowie ein schaltbares Ventil (405) aufweist, die derart geschaltet sind,
- dass der abgezweigte Wärmeträger (102) in Flußrichtung betrachtet vom ersten Verbindungspunkt (VP1) über die Pumpe (407) zum Rückschlagventil (409) gelangt,
- dass der abgezweigte Wärmeträger (102) in Flußrichtung betrachtet vom Rückschlagventil (409) über den Wärmetauscher (208) zum elektrischen Vorheizer (406) und von dort zum zweiten Verbindungspunkt (VP2) gelangt,
- bei dem das schaltbare Ventil (405) parallel zur Pumpe (407) und zum Rückschlagventil (409) angeordnet ist, so dass diese über das schaltbare Ventil (405) überbrückbar sind, wobei der Wärmeträger (102) bei einem ersten Schaltzustand des schaltbaren Ventils (405) vom ersten Verbindungspunkt (VP1) über die Pumpe (407) und über das nachgeschaltete Rückschlagventil (409) zum Wärmetauscher (208) gelangt und wobei in einem zweiten Schaltzustand des schaltbaren Ventils (405) der Wärmeträger (102) vom ersten Verbindungspunkt (VP1) direkt zum Wärmetauscher (208) gelangt, und wobei das Rückschlagventil (409) über die Steuerung der Pumpe (407) eine Zirkulation des Wärmeträgers (102) durch das Vorwärmgerät (401) verhindert.

8. Hybridfahrzeug nach einem der vorhergehenden Ansprüche,
- bei dem das Hybridfahrzeug ein Hybrid-Schienenfahrzeug ist,
- bei dem der Verbrennungsmotor ein Dieselmotor ist, und
- bei dem der elektrische Antrieb ein elektrischer Antrieb ist, der über einen Fahrdraht mit elektrischer Leistung versorgt wird.

## Claims

1. Hybrid vehicle having, as a changeable drive, an internal combustion engine (100), an electric drive (200) and two cooling circuits (KK1, KK2),
- in which the internal combustion engine (100) has a first cooling circuit (KK1) with a heat carrier (102) and with a cooler (106), wherein the first cooling circuit (KK1) is intended to take up heat of the internal combustion engine (100), and to conduct said heat to the cooler (106), by means of the heat carrier (102) in order to make it possible for the heat to be dissipated to surroundings of the internal combustion engine (100),
- in which the electric drive (200) has a second cooling circuit (KK2) with a heat carrier (202) and with a cooler (206), wherein the second cooling circuit (KK2) is intended to conduct heat of components (201) of the electric drive (200) to the cooler (206) by means of the heat carrier (202) in order to make it possible for the heat to be dissipated to surroundings of the electric drive (200),
- in which a pre-heating circuit (VWK) is arranged between the first cooling circuit (KK1) and the second cooling circuit (KK2),
- in which the pre-heating circuit (VWK) is connected to the first cooling circuit (KK1) via two connecting points (VP1, VP2) in such a way that the heat carrier (102) of the first cooling circuit (KK1) circulates through components of the pre-heating circuit (VWK),
- in which the pre-heating circuit (VWK) and the second cooling circuit (KK2) have a heat exchanger (208) as a common component and are thermally coupled by the heat exchanger (208) in such a way that heat is controllably exchangeable between the heat carriers (102, 202) of the two cooling circuits (KK1, KK2),
- in which the pre-heating circuit (VWK) has an electrical auxiliary heater (406) which is connected in series with the heat exchanger (208) so that the electrical auxiliary heater (406) and the heat exchanger (208) are likewise flowed through by the heat carrier (102) of the first cooling circuit (KK1), and
- the electrical auxiliary heater (406) is arranged and designed in such a way that heat generated by it is transferable according to requirement into at least one of the two cooling circuits (KK1, KK2),
- in which the second cooling circuit (KK2) has, in addition to the heat carrier (202), the components (201) of the electric drive (200), the heat exchanger (208), a pump (207) and the cooler (206), which, as seen in the flow direction of the heat carrier (202), are connected in such a way:
- that the heat carrier (202) passes from the components (201) to the pump (207),
- that the heat carrier (202) passes from the pump (207) directly to the cooler (206), on the one hand, and from the pump (207) to the cooler (206) via the heat exchanger (208), on the other hand,
- that the heat carrier (202) passes from the cooler (206) back to the components (201) in order to take over the heat generated during the operation of the components (201).

2. Hybrid vehicle according to Claim 1,
- in which the first cooling circuit (KK1) has cylinders (101) of the internal combustion engine (100), the heat carrier (102), a collecting container (103), a distributor container (104), an adjustable thermostat valve (105), the cooler (106), a pump (107) and an engine-oil cooler (108), which, as seen in the flow direction of the heat carrier (102), are connected in such a way:
- that the heat carrier (102) is directed in a divided manner from the distributor container (104) to the cylinders (101) for carrying out cylinder cooling,
- that the heat carrier (102) is collected by the collecting container (103) after passing the cylinders (101),
- that, from the collecting container (103), either the heat carrier (102) passes to the pump (107) via the thermostat valve (105) and via the cooler (106) or the heat carrier (102) passes from the thermostat valve (105) directly to the pump (107),
- that the heat carrier (102) passes from the pump (107) back to the distributor container (104) via the engine-oil cooler (108).

3. Hybrid vehicle according to either of the preceding claims,
- in which a first connecting point (VP1) is arranged, as seen in the flow direction of the heat carrier (102) of the first cooling circuit (KK1), functionally ahead of the inlet of the pump (107) so that, in every position of the thermostat valve (105), the first connecting point (VP1) is in contact with the heat carrier (102) and feeds the latter at least partially to the pre-heating circuit (VWK),
- in which a second connecting point (VP2) is arranged between the engine-oil cooler (108) and the distributor container (104) of the first cooling circuit (KK1) in order to feed the branched-off heat carrier (102) of the first cooling circuit (KK1) back to the latter.

4. Hybrid vehicle according to one of the preceding claims,
- in which the pre-heating circuit (VWK) has a first series connection (SS1) with the functionality of a pre-heating device (301),
- in which the first series connection (SS1) is connected to the first connecting point (VP1) at the inlet side, and to the second connecting point (VP2) at the outlet side, so that the branched-off heat carrier (102) of the first cooling circuit (KK1) passes from the first connecting point (VP1) to the second connecting point (VP2) via the first series connection (SS1),
- in which the first series connection has, following one another in series, a pump (307), a heating element (308) and a check valve (309),
- wherein the heating element (308) makes possible generation of heat for an intended operation or for a start-up of the internal combustion engine (100), which heat passes, according to requirement, to components of the internal combustion engine (100), in particular to the cooler (106) of the first cooling circuit (KK1), via the heat carrier (102).

5. Hybrid vehicle according to one of the preceding claims,
- in which the pre-heating circuit (VWK) has a second series connection (SS2) with the functionality of a pre-heating device (406, 208),
- in which the second series connection (SS2) is connected to the first connecting point (VP1) at the inlet side, and to the second connecting point (VP2) at the outlet side, so that the branched-off heat carrier (102) of the first cooling circuit (KK1) passes from the first connecting point (VP1) to the second connecting point (VP2) via the second series connection (SS2),
- in which the second series connection (SS2) has, following one another in series, the electrical auxiliary heater (406) and the heat exchanger (208) of the pre-heating circuit (VWK),
- wherein the electrical auxiliary heater (406) makes possible generation of heat for an intended operation or for a start-up of the internal combustion engine (100) or of the electric drive (200),
- wherein, selectively, either the heat of the auxiliary heater (406) passes, via the heat carrier (102) of the first cooling circuit (KK1), to components of the internal combustion engine (100), in particular to the cooler (106) of the first cooling circuit (KK1), for heating, or
- the heat of the auxiliary heater (406) passes, via the heat exchanger (208) and via the heat carrier (202) of the second cooling circuit (KK2), to components of the electric drive (200), in particular to the cooler (206) of the second cooling circuit (KK2), for heating.

6. Hybrid vehicle according to one of the preceding claims, in which the electrical auxiliary heater (406) is supplied with power from an additional secondary winding of the main transformer of the hybrid vehicle (1), or from an auxiliary-operation on-board electrical system of the hybrid vehicle (1), so that it is operable and activatable even with the hybrid vehicle (1) at a standstill.

7. Hybrid vehicle according to one of the preceding claims,
- in which, for realizing the functionality of the pre-heating device (401), the second series connection (SS2) has, in addition to the electrical auxiliary heater (406) and the heat exchanger (208), a pump (407), a check valve (409) and a switchable valve (405), which are connected in such a way
- that the branched-off heat carrier (102) passes, as seen in the flow direction, from the first connecting point (VP1) to the check valve (409) via the pump (407),
- that the branched-off heat carrier (102) passes, as seen in the flow direction, from the check valve (409) to the electrical pre-heater (406) via the heat exchanger (208) and from said electrical pre-heater to the second connecting point (VP2),
- in which the switchable valve (405) is arranged parallel to the pump (407) and to the check valve (409), so that the latter are able to be bridged via the switchable valve (405), wherein, in a first switching state of the switchable valve (405), the heat carrier (102) passes from the first connecting point (VP1) to the heat exchanger (208) via the pump (407) and via the downstream check valve (409), and wherein, in a second switching state of the switchable valve (405), the heat carrier (102) passes from the first connecting point (VP1) directly to the heat exchanger (208), and wherein the check valve (409) prevents circulation of the heat carrier (102) through the pre-heating device (401) via the control of the pump (407).

8. Hybrid vehicle according to one of the preceding claims,
- in which the hybrid vehicle is a hybrid rail vehicle,
- in which the internal combustion engine is a diesel engine, and
- in which the electric drive is an electric drive which is supplied with electrical power via a contact wire.

## Revendications

1. Véhicule hybride qui présente comme entraînement interchangeable un moteur à combustion interne (100), un entraînement électrique (200) ainsi que deux circuits de refroidissement (KK1, KK2),
- dans lequel le moteur à combustion interne (100) présente un premier circuit de refroidissement (KK1) avec un agent caloporteur (102) et avec un radiateur (106), le premier circuit de refroidissement (KK1) étant prévu pour absorber la chaleur du moteur à combustion interne (100) au moyen du fluide caloporteur (102) et pour la conduire au radiateur (106) afin de permettre une évacuation de la chaleur vers le milieu avoisinant le moteur à combustion interne (100),
- dans lequel l'entraînement électrique (200) présente un deuxième circuit de refroidissement (KK2) avec un agent caloporteur (202) et avec un radiateur (206), le deuxième circuit de refroidissement (KK2) étant prévu pour conduire de la chaleur de composants (201) de l'entraînement électrique (200) au moyen du fluide caloporteur (202) vers le radiateur (206), afin de permettre un transfert de la chaleur vers un environnement de l'entraînement électrique (200),
- dans lequel un circuit de préchauffage (VWK) est disposé entre le premier circuit de refroidissement (KK1) et le deuxième circuit de refroidissement (KK2),
- dans lequel le circuit de préchauffage (VWK) est relié au premier circuit de refroidissement (KK1) par deux points de connexion (VP1, VP2) de telle sorte que le fluide caloporteur (102) du premier circuit de refroidissement (KK1) circule à travers des composants du circuit de préchauffage (VWK),
- dans lequel le circuit de préchauffage (VWK) et le deuxième circuit de refroidissement (KK2) présentent un échangeur de chaleur (208) comme composant commun et sont couplés thermiquement par l'échangeur de chaleur (208) de telle sorte que la chaleur peut être échangée de manière contrôlable entre les fluides caloporteurs (102, 202) des deux circuits de refroidissement (KK1, KK2),
- dans lequel le circuit de préchauffage (VWK) comporte un dispositif de chauffage électrique d'appoint (406) qui est relié en série à l'échangeur de chaleur (208), de sorte que le dispositif de chauffage électrique d'appoint (406) et l'échangeur de chaleur (208) sont également traversés par le fluide caloporteur (102) du premier circuit de refroidissement (KK1), et
- que le chauffage électrique d'appoint (406) est disposé et conçu de telle sorte que la chaleur qu'il produit peut être transférée en cas de besoin dans au moins l'un des deux circuits de refroidissement (KK1, KK2),
- dans lequel le deuxième circuit de refroidissement (KK2) présente, outre le fluide caloporteur (202), les composants (201) de l'entraînement électrique (200), l'échangeur de chaleur (208), une pompe (207) et le radiateur (206) qui, vus dans le sens d'écoulement du fluide caloporteur (202), sont montés de telle manière :
- que le fluide caloporteur (202) passe des composants (201) à la pompe (207),
- que le fluide caloporteur (202) arrive directement de la pompe (207) au refroidisseur (206), d'une part, et qu'il arrive de la pompe (207) au refroidisseur (206) par l'intermédiaire de l'échangeur de chaleur (208), d'autre part,
- que le fluide caloporteur (202) retourne du refroidisseur (206) aux composants (201) pour reprendre la chaleur produite lors du fonctionnement des composants (201).

2. Véhicule hybride selon la revendication 1,
- dans lequel le premier circuit de refroidissement (KK1) comprend des cylindres (101) du moteur à combustion interne (100), le fluide caloporteur (102), un réservoir collecteur (103), un réservoir distributeur (104), une soupape thermostatique réglable (105), le radiateur (106), une pompe (107) ainsi qu'un refroidisseur d'huile moteur (108), qui, vus dans le sens d'écoulement du fluide caloporteur (102), sont montés de telle manière :
- que le fluide caloporteur (102) est réparti depuis le réservoir de distribution (104) vers les cylindres (101) pour effectuer un refroidissement des cylindres,
- que le fluide caloporteur (102) est rassemblé par le collecteur (103) après avoir traversé les cylindres (101),
- que le fluide caloporteur (102) arrive du collecteur (103) à la pompe (107) soit en passant par la vanne thermostatique (105) et par le refroidisseur (106), soit que le fluide caloporteur (102) arrive directement de la vanne thermostatique (105) à la pompe (107),
- que le fluide caloporteur (102) passe de la pompe (107) au réservoir de distribution (104) en passant par le refroidisseur d'huile moteur (108).

3. Véhicule hybride selon l'une quelconque des revendications précédentes,
- dans lequel un premier point de jonction (VP1) est fonctionnellement disposé en amont de l'entrée de la pompe (107), vu dans le sens d'écoulement du fluide caloporteur (102) du premier circuit de refroidissement (KK1), de sorte que, quelle que soit la position de la vanne thermostatique (105), le premier point de jonction (VP1) est en contact avec le fluide caloporteur (102) et l'amène au moins partiellement au circuit de préchauffage (VWK),
- dans lequel un deuxième point de connexion (VP2) est disposé entre le radiateur d'huile moteur (108) et le réservoir de distribution (104) du premier circuit de refroidissement (KK1), afin de réacheminer le fluide caloporteur (102) dérivé du premier circuit de refroidissement (KK1) vers celui-ci.

4. Véhicule hybride selon l'une quelconque des revendications précédentes,
- dans lequel le circuit de préchauffage (VWK) comprend un premier circuit en série (SS1) ayant la fonctionnalité d'un appareil de préchauffage (301),
- dans lequel le premier circuit en série (SS1) est relié côté entrée au premier point de liaison (VP1) et côté sortie au deuxième point de liaison (VP2), de sorte que le fluide caloporteur (102) dérivé du premier circuit de refroidissement (KK1) parvient du premier point de liaison (VP1) au deuxième point de liaison (VP2) en passant par le premier circuit en série (SS1),
- dans lequel le premier circuit en série comprend, en série, une pompe (307), un élément chauffant (308) et un clapet anti-retour (309),
- moyennant quoi l'élément chauffant (308) permet de produire de la chaleur pour un fonctionnement prévu ou pour une mise en service du moteur à combustion interne (100), qui, en cas de besoin, parvient par l'intermédiaire du caloporteur (102) à des composants du moteur à combustion interne (100), notamment au radiateur (106) du premier circuit de refroidissement (KK1).

5. Véhicule hybride selon l'une quelconque des revendications précédentes,
- dans lequel le circuit de préchauffage (VWK) comprend un deuxième circuit en série (SS2) ayant la fonctionnalité d'un appareil de préchauffage (406, 208),
- dans lequel le deuxième circuit en série (SS2) est relié côté entrée au premier point de liaison (VP1) et côté sortie au deuxième point de liaison (VP2), de sorte que le fluide caloporteur (102) dérivé du premier circuit de refroidissement (KK1) parvient du premier point de liaison (VP1) au deuxième point de liaison (VP2) via le deuxième circuit en série (SS2),
- dans lequel le deuxième circuit en série (SS2) comprend, en série, le chauffage électrique d'appoint (406) et l'échangeur de chaleur (208) du circuit de préchauffage (VWK),
- moyennant quoi de la chaleur peut être produite par le chauffage électrique d'appoint (406) pour un fonctionnement prévu ou pour une mise en service du moteur à combustion (100) ou de l'entraînement électrique (200),
- moyennant quoi la chaleur du chauffage d'appoint (406) parvient soit à des composants du moteur à combustion interne (100), en particulier au radiateur (106) du premier circuit de refroidissement (KK1), par l'intermédiaire du fluide caloporteur (102) du premier circuit de refroidissement (KK1), pour être chauffé soit
- la chaleur du chauffage d'appoint (406) parvient, par l'intermédiaire de l'échangeur de chaleur (208) et par l'intermédiaire de fluides caloporteurs (202) du deuxième circuit de refroidissement (KK2), à des composants de l'entraînement électrique (200), en particulier au radiateur (206) du deuxième circuit de refroidissement (KK2), pour être chauffé.

6. Véhicule hybride selon l'une des revendications précédentes, dans lequel le chauffage électrique d'appoint (406) est alimenté en énergie à partir d'un bobinage secondaire supplémentaire du transformateur principal du véhicule hybride (1) ou à partir d'un circuit électrique de bord en mode auxiliaire du véhicule hybride (1), de sorte qu'il peut être utilisé et mis en marche même lorsque le véhicule hybride (1) est à l'arrêt.

7. Véhicule hybride selon l'une quelconque des revendications précédentes,
- dans lequel le deuxième circuit en série (SS2) présente, pour exécuter la fonctionnalité de l'appareil de préchauffage (401), outre le chauffage électrique d'appoint (406) et l'échangeur de chaleur (208), une pompe (407), un clapet anti-retour (409) ainsi qu'une vanne commutable (405), qui sont montés de telle manière,
- que le fluide caloporteur dérivé (102), vu dans le sens de l'écoulement, passe du premier point de jonction (VP1) au clapet anti-retour (409) en passant par la pompe (407),
- que le fluide caloporteur dérivé (102), vu dans le sens de l'écoulement, parvient du clapet anti-retour (409) au préchauffeur électrique (406) en passant par l'échangeur de chaleur (208) et de là au deuxième point de connexion (VP2),
- dans lequel la soupape commutable (405) est disposée en parallèle avec la pompe (407) et le clapet anti-retour (409), de sorte que ceux-ci peuvent être réunis par la soupape commutable (405), le fluide caloporteur (102) arrivant, sous un premier état de commutation de la vanne commutable (405), du premier point de liaison (VP1) à l'échangeur de chaleur (208) en passant par la pompe (407) et par le clapet anti-retour (409) monté en aval, et le fluide caloporteur (102) arrivant, sous un deuxième état de commutation de la vanne commutable (405), du premier point de liaison (VP1) directement à l'échangeur de chaleur (208), et dans lequel le clapet anti-retour (409) empêche une circulation du fluide caloporteur (102) à travers l'appareil de préchauffage (401) par l'intermédiaire de la commande de la pompe (407) .

8. Véhicule hybride selon l'une quelconque des revendications précédentes,
- dans lequel le véhicule hybride est un véhicule hybride sur rail,
- dans lequel le moteur à combustion est un moteur diesel, et
- dans lequel l'entraînement électrique est un entraînement électrique alimenté en énergie électrique par un fil de contact.
